# EUROPÄISCHE PATENTSCHRIFT

(11) **EP 4 770 002 B1**
(45) Veröffentlichungstag und Bekanntmachung des Hinweises auf die Patenterteilung: **09.12.2026**
(21) Anmeldenummer: 24223624.8
(22) Anmeldetag: 30.12.2024
(51) Int. Cl.: H04L 9/08, H04L 9/12

(54) **NEUTRINO-BASIERTES QUANTENSICHERES SCHLÜSSELAUSTAUSCHSYSTEM**
NEUTRINO-BASED QUANTUM SECURE KEY EXCHANGE SYSTEM
SYSTÈME D'ÉCHANGE DE CLÉS À SÉCURITÉ QUANTIQUE BASÉ SUR NEUTRINO

(43) Veröffentlichungstag der Anmeldung: 01.07.2026
(73) Patentinhaber: Deutsche Telekom AG, 53113 Bonn (DE)
(72) Erfinder: Dr. GEITZ, Marc, Hagen (DE)
(74) Vertreter: karo IP

(56) Entgegenhaltungen:
- US-A1- 20230 350 858
- US-A1- 20240 372 628
- AELMANS MELCHIOR ET AL: "IPsec VPNs Enhanced with RFC8784 Quantum Cryptography", 1 April 2023 (2023-04-01), XP093280986, Retrieved from the Internet <URL:https://www.juniper.net/documentation/en_US/day-one-books/DayOne-Quantum-safeIPsec-2.pdf>
- DANIEL R L BROWN: "Formally Assessing Cryptographic Entropy", IACR, INTERNATIONAL ASSOCIATION FOR CRYPTOLOGIC RESEARCH, vol. 20130102:185223, 13 December 2012 (2012-12-13), pages 1 - 97, XP061006422
- SACHA E KOPP: "Accelerator Neutrino Beams", ARXIV.ORG, CORNELL UNIVERSITY LIBRARY, 201 OLIN LIBRARY CORNELL UNIVERSITY ITHACA, NY 14853, 14 September 2006 (2006-09-14), XP080253640, DOI: 10.1016/J.PHYSREP.2006.11.004

## Beschreibung

Die Erfindung betrifft ein Verfahren und ein System zum Austausch kryptografischer Schlüssel unter Verwendung eines Neutrino-basierten Kommunikationskanals zwischen einem Sender und einem Empfänger.

Neutrinos, subatomare Teilchen mit verschwindend geringer Masse, interagieren mit Materie ausschließlich über die schwache Wechselwirkung, was bedeutet, dass sie nahezu ohne jegliche Wechselwirkung durch große Volumina von Materie hindurchtreten können. Die Erde ist nahezu "durchsichtig" für Neutrinos.

Auch wenn es einige Reaktionen, wie "Electron Capture", "Beta⁺ Zerfall" und "Elektron-Positron Annihilation", gibt, bei denen Neutrinos entstehen, so erfolgt die gezielte Erzeugung von Neutrinos über Kernprozesse, bei denen insbesondere Protonen in einem Beschleuniger auf hohe Energien von vielen GeV (1 GeV bis 450 GeV) gebracht und auf ein Target aus festem Material, wie Graphit, geschossen werden. Bei der Kollision der hochenergetischen Protonen mit Atomkernen entstehen instabile Teilchen wie Pionen (π⁺ und π⁻) oder Kaonen (K⁺ und K⁻), die schnell (innerhalb von Nanosekunden) in Myon-Neutrinos und Antimyonen zerfallen und dabei Neutrinos freisetzen. Die geladenen Pionen können zunächst mithilfe magnetischer Fokussiereinrichtungen kanalisiert und ausgerichtet werden, so dass sich die nach ihrem Zerfall entstehenden Neutrinos entlang der Richtung des Zerfallsprozesses ausbreiten. Auf diese Art kann ein ausgerichteter Neutrino-Strahl erzeugt werden, der anschließend durch Materie in Richtung eines Detektorsystems propagiert. Ein Absorber stoppt hingegen alle anderen Zerfallsprodukte.

Einige der derzeit existierenden Institutionen haben Anlagen, bei deren Betrieb Neutrinos entstehen. Zu nennen sind beispielsweise das Fermilab in den USA (Protonenstrahlen von 30-120 GeV), das CERN in Genf, Europa (Protonenstrahlen von 50-450 GeV) oder das J-PARC in Japan (Protonenstrahlen von 30 GeV).

Wegen des besonders kleinen Wirkungsquerschnittes stellt die Detektion von Neutrinos eine große Herausforderung dar. Bekannte Detektoren nutzen Schwerwassertanks, die in unterirdischen Kavernen installiert sind, arktisches Eis, wie es im IceCube-Experiment genutzt wird, das Eis und das Wasser des Baikal-Sees oder Aluminium-Blei-Schichten, wie sie im MINOS-Experiment verwendet werden. Mit diesen Detektoren werden Zerfallsprodukte respektive Sekundärpartikel, wie geladene Teilchen oder Photonen, insbesondere Lichtsignale der Cherenkov-Strahlung, erfasst. Diese Cherenkov-Strahlung entsteht, wenn elektrisch geladene Teilchen als Reaktionsprodukte einer Neutrino-Interaktion sich schneller als die Lichtgeschwindigkeit in dem jeweiligen Medium bewegen. Diese Lichtsignale werden mit Szintillatoren oder ähnlichen photonensensitiven Detektoren aufgenommen und ermöglichen so die Analyse von Neutrino-Interaktionen. Aufgrund der Richtungsabhängigkeit des Lichts auf dem Cherenkovkegels lässt sich sogar die Richtung, aus der das ursprüngliche Neutrino stammt, rekonstruieren.

Am Fermilab werden typischerweise 10¹³ Neutrinos mit einer Energie bis 30GeV pro Puls erzeugt. Der MINOS Detektor, der 760 km entfernt in einer Kaverne in Minnesota verbaut ist, misst davon etwa 5 - 6 Reaktionen pro Puls über den Nachweis von Myonen. Die Repetitionsrate der Pulse hängt von der Repetitionsrate des den Protonenstrahl erzeugenden Linearbeschleunigers ab und beträgt derzeit typischerweise 50Hz.

Auf der anderen Seite hängt die Sicherheit kryptografischer Schlüsselaustauschverfahren maßgeblich davon ab, dass die Übertragungskanäle gegen Abhör- und Manipulationsversuche geschützt sind. Bekannte Methoden wie insbesondere die Quantenkryptografie bieten zwar bereits ein hohes Maß an Sicherheit, können jedoch durch physikalische Angriffe, insbesondere über Seitenkanäle, kompromittiert werden.

Die Aufgabe der Erfindung liegt nunmehr darin, ein Verfahren und ein System bereit zu stellen, das ein Höchstmaß an Sicherheit bei der Übertragung kryptographischer Schlüssel bietet.

Diese Aufgabe wird durch das Verfahren nach Anspruch 1 und das System nach Anspruch 13, sowie die Vorrichtungen nach den Ansprüchen 14 und 15 gelöst. Die jeweiligen Unteransprüche enthalten besonders vorteilhafte Ausführungsformen.

Anspruchsgemäß nutzt die vorliegende Erfindung Neutrinos für ein verschlüsseltes Schlüsselaustauschverfahren, das inhärent sicher ist und auf den beschriebenen physikalischen Prinzipien aufbaut. Erfindungsgemäß nutzt das Verfahren dazu folgende Schritte:
Senderseitig wird zunächst ein Neutrino-Strahl erzeugt. Das geschieht insbesondere mittels eines auf hohe Energien beschleunigen Protonenstrahls, wobei es nicht ausgeschlossen ist, dass in Zukunft auch ein Strahl anderer hochenergetischer Teilchen für die Erzeugung von Neutrino-Strahlen genutzt werden kann. Der Strahl, in diesem Falle der Protonenstrahl wird auf ein Target gelenkt, wo die Protonen durch Kollisionen kurzlebige Teilchen erzeugen, aus deren Zerfall Neutrinos hervorgehen.

Auf diesen Strahl aus Neutrinos wird der zu übermittelnde kryptografische Schlüssel aufgeprägt, indem zunächst senderseitig einer Folge von Zufallsbits generiert wird, die den Schlüssel repräsentiert. Die Kodierung dieser Zufallsbits auf den Neutrino-Strahl erfolgt durch die Steuerung der Auslenkung des Protonenstrahls mittels eines steuerbaren Ablenksystems, insbesondere eines Kickermagneten, um entsprechend der Zufallsbits den Protonenstrahl entweder auf das Target oder auf einen Absorber zu lenken. Mit dieser entsprechend der Zufallsbits gesteuerten Auslenkung des Protonenstrahls auf das Target werden die Zufallsbits als Neutrino-Pulse, mithin als eine Amplitudenmodulation auf einen Neutrino-Strahl, kodiert. Der solchermaßen erzeugte und den kryptographischen Schlüssel tragende Strahl aus Neutrino-Pulsen tritt vom Sender durch das Material der Erde hindurch zu einem weit entfernt vom Sender befindlichen Empfänger. Sender und Empfänger können an sich auf dem Erdball gegenüberliegenden Orten befinden.

Um die Neutrino-Pulse auf Seiten des Empfängers zuordnen, respektive richtig "lesen" zu können, bedarf es der Synchronisierung zwischen Sender und Empfänger mittels einer Zeitsynchronisationseinheit, welche die Taktung der erzeugten Neutrino-Pulse mit Zeitfenstern des Empfängersystems synchronisiert.

Der Empfang der Neutrino-Pulse erfolgt durch einen dem Empfänger zugeordneten Neutrino-Detektor, der Zerfallsprodukte, insbesondere Lichtsignale, die bei der Wechselwirkung der Neutrinos mit einem Detektormedium erzeugt werden, detektiert. Die detektierten Signale werden dann unter Berücksichtigung der Synchronisation jeweils einem Schlüsselbit zugeordnet. Die empfangenen Schlüsselbits werden zur Erzeugung des kryptografischen Schlüssels aneinandergereiht und dann in einem Schlüsselspeichermodul des Empfängers gespeichert.

Mit der Erfindung lässt sich das besondere Potenzial von Neutrinos für die kryptografische Datenübertragung nutzen. So eignen sich Neutrinos deswegen ganz besonders als Übertragungsmedium für ein quantensicheres Schlüsselaustauschsystem, weil ein Neutrino-Strahl, der durch die Erde propagiert, sich dem Zugriff möglicher Angreifer komplett entzieht und das Signal somit unerreichbar wäre. Allein am Austritt aus der Erde, also am legitimen Detektor, besteht Zugriff auf das Signal. Zudem müsste der Detektor eines möglichen Angreifers Dimensionen einnehmen, die einem Systembetreiber nicht verborgen bleiben könnten.

Neben diesen Aspekten der besonderen Sicherheit, die die Erfindung bietet, sind die notwendigen Investitionen gering, da lediglich einige wenige Komponenten, wie solche zur Synchronisation, ein Zufallsgenerator (RNG), und Komponenten zur sicheren Schlüsselbitverwahrung, einer existierenden Anlage hinzugefügt werden müssten. Nutzbare Anlagen befinden sich, wie oben schon beschrieben, in Japan, in den USA und in Europa. Diese Anlagen müssten lediglich angepasst werden, so dass sich damit ein "primäres hoheitliches Schlüsselaustauschverfahren" zwischen den Kontinenten realisieren ließe.

Obwohl die Schlüsselaustauschraten recht gering sind - bei 50Hz Repetitionsrate dauert es etwa 5 Sekunden, bis ein 256 Bit Schlüssel versendet und empfangen ist - hat das erfindungsgemäße Verfahren ganz besondere Vorteile. Sollten beispielsweise alle anderen Schlüsselaustauschtechnologien versagen, wenn also beispielsweise ein Angriff auf PQC-Algorithmen stattfindet, zu denen kein Sicherheitsbeweis existiert, der einen solchen Angriff kategorisch ausschließt, oder es gibt einen erfolgreichen Angriff auf einen quantenoptischen Kanal eines QKD oder eines Quanteninternet-Protokolls über einen nicht abgefangenen Seitenkanal, dann ermöglicht das erfindungsgemäße Verfahren dennoch eine sichere Verbindungen zwischen den Kontinenten.

Zudem lassen sich trotz der langsamen Austauchrate aus einem kurzen primären Schlüssel weitere Schlüssel ableiten, die dann zur Verschlüsselung deutlich größerer Datenmengen verwendet werden können. Mit der Umsetzung der Erfindung würden die nationalen und kontinentalen Forschungszentren zu primären Sicherheitszentren für eine quantensichere Kommunikation. Zudem wären Telekommunikationsprovider in der Lage, nationale Kommunikationspunkte zum quantensicheren Schlüsselaustausch mittels Neutrinos entsprechend dem dargestellten System und Verfahrens zu errichten.

Dabei ermöglicht der Einsatz eines Kickermagneten in einer vorteilhaften Ausführungsform des Verfahrens eine präzise und schnelle Steuerung des Protonenstrahls. Der Kickermagnet erzeugt hochfrequente magnetische Pulse, um den Strahl entweder auf das Target oder den Absorber zu lenken. Diese gezielte Ablenkung sorgt für eine eindeutige Zuordnung der Zufallsbits zu Neutrinopulsen, was die direkte Kodierung der Schlüsselbits ermöglicht. Dabei bieten gerade Kickermagneten eine hohe Betriebsgeschwindigkeit und Zuverlässigkeit, was die Effizienz und Genauigkeit des Schlüsselaustauschs erhöht. Zudem gewährleistet die schnelle Schaltfähigkeit, dass das System auch bei hohen Bitraten reibungslos arbeitet.

Vorteilhafterweise nutzt die Zeitsynchronisationseinheit empfangene Signale eines Satelliten gestützten Navigationssystems, wie GPS, als Referenzzeitquelle, um die Zeitsynchronisation zwischen Sender und Empfänger aufrechtzuerhalten. Sender und Empfänger können dann mit derselben insbesondere in Zeitschlitze oder Zeitfenster eingeteilten Zeitstruktur arbeiten. Durch die GPS-Synchronisation kann der Empfänger die Zeitfenster exakt auf die Ankunft der Neutrino-Pulse abstimmen. Die Nutzung des globalen GPS-Systems bietet eine zuverlässige und weit verbreitete Methode zur Zeitsynchronisation. Sie minimiert den Aufwand für den Aufbau separater Synchronisationsinfrastrukturen und erhöht die Interoperabilität des Systems.

Um die benötigten Zufallszahlen zu erzeugen wird vorteilhafterweise ein physikalischer Zufallszahlengenerator (RNG, Random Number Generator) genutzt, der auf quantentechnologischen Prozessen, wie der Messung von Quantenrauschen oder der Detektion einzelner Photonen, basiert. Diese Zufallszahlen werden verwendet, um die Schlüsselbits zu erzeugen. Solche physikalischen RNGs erzeugen im Gegensatz zu algorithmischen Zufallszahlengeneratoren, die nur pseudozufällige Sequenzen liefern, wirklich zufällige Zahlen. Dies erhöht die kryptografische Sicherheit erheblich, da die Schlüssel nicht vorhersagbar sind.

Auch für die erfindungsgemäße Vorgehensweise ist es vorteilhaft, mittels Szintillations-Detektoren Cherenkovstrahlung zu detektieren, die durch die Wechselwirkung von Neutrinos mit einem Detektormedium erzeugt wird. So registrieren Szintillations-Detektoren die von geladenen Sekundärteilchen erzeugte Cherenkovstrahlung, die entsteht, wenn Neutrinos mit dem Detektormaterial interagieren. Die Strahlung wird durch die Detektoren in elektrische Signale umgewandelt. Szintillations-Detektoren sind hochempfindlich und ermöglichen eine präzise Erkennung der Wechselwirkungen und deren Richtungsabhängigkeit. Somit lassen sich die Signale des Verfahrens von Signalen aus dem kosmischen Untergrund zuverlässig trennen. Sie liefern zuverlässige Daten selbst bei geringen Interaktionsraten, wodurch die Detektionseffizienz maximiert wird.

Dabei wird vorteilhafterweise die Richtungsabhängigkeit der Cherenkovstrahlung genutzt, um die Flugbahn der ursprünglichen Neutrinos zu rekonstruieren. Dies erfolgt durch Messung der Winkelverteilung der emittierten Photonen. Durch diese Methode wird die Genauigkeit bei der Zuordnung der Neutrino-Pulse zu den Schlüsselbits verbessert und es wird ermöglicht, Störungen oder unerwünschte Signale auszuschließen.

Um eine besonders hohe Sicherheit zu gewährleisten, ist es vorteilhaft, die kryptografischen Schlüssel auf der Senderseite und auf der Empfängerseite in einem Hardware-Security-Modul (HSM) zu speichern. Solche HSM verfügen über zusätzliche Sicherheitsfunktionen wie physische Manipulationserkennung. Die Verwendung von HSMs gewährleistet höchste Sicherheitsstandards und schützt die Schlüssel vor Cyberangriffen, Diebstahl oder physischer Manipulation.

In einer weiteren vorteilshaften Ausgestaltung werden die Zufallsbits bei der Erzeugung mit FEC-Codes versehen, um Fehler bei der Übertragung erkennen und korrigieren zu können. Dies ermöglicht die Rekonstruktion der ursprünglichen Nachricht, selbst wenn einige Bits verloren gehen oder beschädigt werden. FEC (Forward Error Correction) verbessert die Zuverlässigkeit der Schlüsselübertragung erheblich und verringert die Wahrscheinlichkeit von Kommunikationsfehlern, insbesondere bei langen Übertragungsstrecken.

Wie schon erwähnt, werden die Neutrino-Pulse vorteilhafterweise auf einen Weg durch die Erde geleitet, wodurch sie physikalisch vor Abhörversuchen geschützt sind. Die geringe Wechselwirkungswahrscheinlichkeit der Neutrinos sorgt dafür, dass sie nahezu ungestört ankommen. Die physikalische Abschirmung durch die Erde macht das Abhören der Neutrino-Pulse praktisch unmöglich und gewährleistet eine außergewöhnliche Sicherheit des Kommunikationskanals.

Um die Neutrino-Strahlen auf der Senderseite zu bündeln in eine definierte Richtung zu lenken, werden vorteilhafterweise magnetische Fokussierelemente genutzt, mit denen die Pionen-Strahlen auf die gewünschte Flugbahn ausgerichtet werden, bevor sie in Neutrinos zerfallen. Diese Ausrichtung erhöht die Intensität und Effizienz des Neutrino-Strahlers und reduziert Streuverluste, was die Signalqualität verbessert.

Wie schon angedeutet, ist es darüber hinaus vorteilhaft, die Synchronisationseinheit auf der Empfängerseite für die Kalibrierung der Detektionszeitfenster einzusetzen, um präzise Zuordnungen der Neutrino-Pulse zu kryptographischen Schlüsselbits zu bewerkstelligen. Die Synchronisationseinheit stimmt die Detektionszeitfenster präzise auf die Ankunft der Neutrino-Pulse ab, um die Schlüsselbits exakt zuzuordnen. Diese Kalibrierung minimiert Fehler und verbessert die Datenintegrität, insbesondere bei variierenden Übertragungsbedingungen.

Nach der Erzeugung werden die Schlüssel vorteilhafterweise über ein Schlüsselmanagementsystem direkt an einen Encryptor weitergeleitet, der ihn verwendet, um Kommunikationsdaten symmetrisch zu verschlüsseln. Die Integration eines Encryptors ermöglicht eine sofortige und sichere Nutzung der Schlüssel für Anwendungen wie sichere Datenübertragung oder optische Kommunikation, was die Effizienz erhöht.

Neben dem beschriebenen Verfahren umfasst die Erfindung auch ein entsprechendes System zur Durführung des Verfahrens. Auch die senderseitige Vorrichtung zum Erzeugen und Versenden eines kryptografischen Schlüssels unter Verwendung eines Neutrino-basierten Kommunikationskanals und die empfängerseitige Vorrichtung zum Empfangen des kryptografischen Schlüssels über den Neutrino-basierten Kommunikationskanal sind jeweils getrennt Bestandteil der Erfindung.

Dabei umfasst die senderseitige Vorrichtung einen Beschleuniger zur Erzeugung eines hochenergetischen Protonenstrahls, ein steuerbares Ablenksystem, das den Protonenstrahl entsprechend einer Folge von Zufallsbits entweder auf ein Target zur Erzeugung von Neutrinos durch den Zerfall kurzlebiger Teilchen oder auf einen Absorber lenkt, einen Zufallszahlengenerator, der die Folge von Zufallsbits generiert und Steuerbefehle an das Ablenksystem ausgibt und eine Zeitsynchronisationseinheit zur Synchronisierung der erzeugten Neutrino-Pulse mit einem Empfängersystem.

Die empfangsseitige Vorrichtungen umfasst erfindungsgemäß einen Neutrino-Detektor, der Lichtsignale detektiert, die durch Wechselwirkungen von Neutrinos mit einem Detektormedium erzeugt werden, eine Signalanalyseeinheit, die die detektierten Lichtsignale verarbeitet und die Signale jeweils einem Schlüsselbit zuordnet und eine Zeitsynchronisationseinheit, die mit der senderseitigen Zeitsynchronisationseinheit kommuniziert, um die zeitliche Zuordnung der Neutrino-Pulse sicherzustellen.

Darüber hinaus sind Speichereinheiten vorgesehen, die senderseitig ein erstes Schlüsselspeichermodul zur Speicherung der Zufallsbits, die den kryptografischen Schlüssel repräsentieren umfassen, und die empfangsseitig ein weiteres Schlüsselspeichermodul zur Speicherung der aus den empfangenen Neutrino-Pulsen gewonnenen Schlüsselbits umfassen, wobei die gesendeten und empfangenen fehlerkorrigierten Schlüsselbits aneinandergereiht werden, um den kryptografischen Schlüssel zu erzeugen. Auf Seiten des Senders und des Empfängers kann ein Encryptor vorgesehen sein, der den Schlüssel verwendet, um Datenpakete oder Lichtsignale mit dem Schlüssel symmetrisch zu verschlüsseln, damit sie sicher über einen klassischen Kanal verschickt werden können.

Die Infrastruktur, die seitens des Senders und des Empfängers zur Erzeugung, zum Versenden, zum Empfangen und zur Wiederherstellung der Schlüssel genutzt wird, bedarf eines besonderen baulichen Schutzes, um das System vor unberechtigtem Zugriff zu schützen.

Nach dem Austausch der Schlüssel werden die eigentlichen Nutzdaten über einen "klassischen" Kanal, der beispielsweise Faser-, Draht- und/oder Funkverbindungen nutzt.

Die Erfindung wird nachfolgend anhand der Figuren näher beschrieben. Es zeigen:
- **Figur 1**: die elastische Streuung eines Neutrinos an Deuterium,
- **Figur 2**: den senderseitigen Aufbau und
- **Figur 3**: den empfängerseitigen Aufbau.

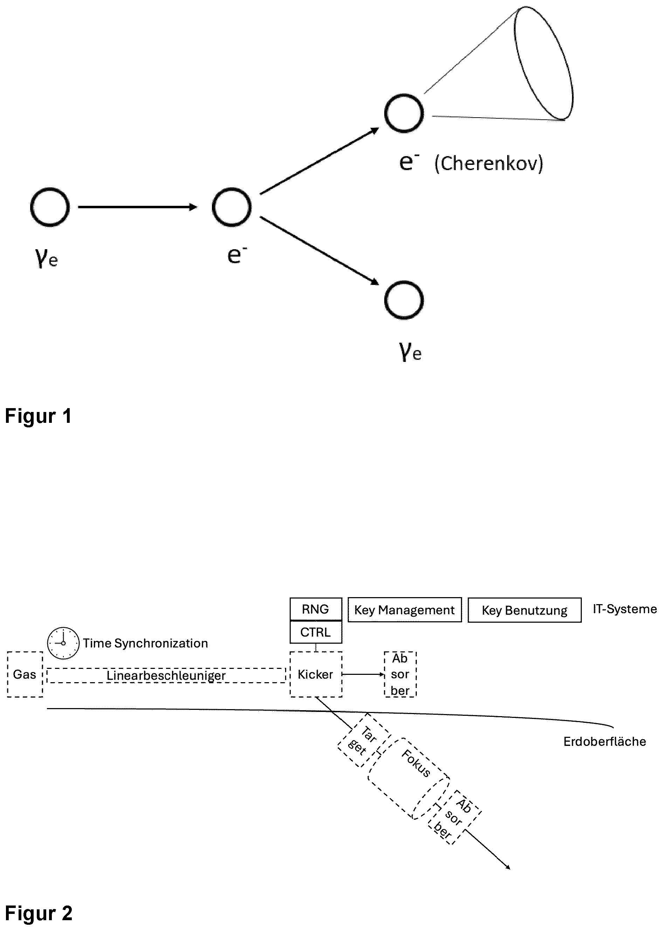

Figur 1 zeigt die elastische Streuung, mit der sich Neutrinos auf Seiten des Detektors nachweisen lassen. Bei der elastischen Streuung interagiert ein Myon-Neutrino (γₑ) direkt mit einem Elektron (e⁻) im Deuterium interagiert. Das Elektron (e⁻) wird gestreut und erzeugt Cherenkov-Strahlung, die sich mit einem Scintilations-Detektor messen lässt. Das Neutrino (γₑ) wird dabei leicht abgelenkt, bleibt jedoch ansonsten unverändert. Diese Reaktion ist sensitiv auf die Richtung des Neutrinos (γₑ), da die Cherenkov-Strahlung die ursprüngliche Flugbahn widerspiegelt. Sie kann auch genutzt werden, um die Energien der Neutrinos zu messen. Im Rahmen der vorliegenden Erfindung wird diese elastische Streuung zur Erzeugung von Neutrinos genutzt.

In Figur 2 ist der senderseitige Aufbau des Systems gezeigt: In einer Quelle wird zunächst ein Gas ionisiert und die entstandenen Protonen durch elektrische Felder in einem Linearbeschleuniger auf hohe Energien beschleunigt. Eine weitere Beschleunigung der Protonen kann mit einem Ringbeschleuniger erfolgen. Der beschleunigte Protonenstrahl bildet die Grundlage für die Neutrino-Erzeugung. Der Beschleuniger ist mit einer Zeitsynchronisationseinheit ("Time Synchronisation") verbunden, die präzise Timing-Informationen liefert, um sicherzustellen, dass die erzeugten Neutrino-Pulse synchron mit den Zeitfenstern des Detektionssystems am Empfänger sind. Die Synchronisation über GPS sorgt dafür, dass Sender und Empfänger präzise aufeinander abgestimmt sind, um die Zuordnung der Schlüsselbits zu gewährleisten.

Aufgrund der niedrigen Repetitionsrate sind die Anforderungen an die Synchronisation zwar nicht hoch, dennoch ist eine Synchronisation für die Zuordnung der Schlüsselbits auf Sender- und Empfängerseite notwendig. Aufgrund der niedrigen Anforderungen lassen sich die Uhren einfach über GPS-Signale oder Ähnliches synchronisieren.

Nach der Beschleunigung wird der Protonenstrahl durch einen Kickermagneten ("Kicker") aus seiner Richtung ausgelenkt. Ein (Quanten-)Zufallszahlengenerator ("RNG") liefert die Steuerinformationen für den Kickermagneten, indem er die Zufallsbits generiert, die den kryptografischen Schlüssel darstellen. Der Einsatz eines physikalischen RNG stellt sicher, dass die generierten Schlüssel wirklich zufällig sind, was die kryptografische Sicherheit maximiert. Mit einem Bit "1" steuert eine Kontrolleinheit ("CTRL") den Kickermagneten, der den aus dem Beschleuniger tretenden Protonenstrahl auf ein Grafit-Target ("Target") lenkt und dabei Pionen erzeugt. Bei einem Bit "0" beeinflusst der Kickermagnet den Protonenstrahl nicht und lenkt ihn dadurch auf einen Absorber ("Absorber"), sodass keine Pionen entstehen. Die Pionen werden durch eine Fokussiereinrichtung ("Fokus") kanalisiert und ausgerichtet, um einen gerichteten und konzentrierten Neutrino-Strahl zu erzeugen. Die Pionen zerfallen dann in Myonen und Myonen Neutrinos (π+ -> µ⁺ + γ_{µ}). Die Myonen werden in einem weiteren Absorber ("Absorber") gebremst, die Neutrinos treten ungehindert durch diesen Absorber hindurch und beginnen ihren Weg durch die Erde ("Erdoberfläche"). Diese steuerbare Ablenkung der hochenergetischen Protonen ermöglicht somit die Kodierung der Zufallsbits in Zeitschlitze des Neutrino-Strahls durch Amplitudenmodulation. Die solchermaßen entstandenen Neutrino-Pulse propagieren durch die Erde in Richtung eines Empfängers mit entsprechendem Detektor.

Es sind auch andere Kommunikationscodes denkbar, um beispielsweise Forward Error Correction Codes (FEC) zu integrieren. Allerdings wird durch FEC Codes die Netto Schlüsselrate reduziert.

Die Zufallszahlen, die den Schlüsseln entsprechen, werden in einem Hardware Security Module als Teil des Schlüsselmanagement ("Key Management") gespeichert, um sie sicher zu verwalten. Die Schlüssel können in der IT-Infrastruktur ("Key Benutzung") entweder direkt genutzt oder für die Weiterverarbeitung bereitgestellt werden.

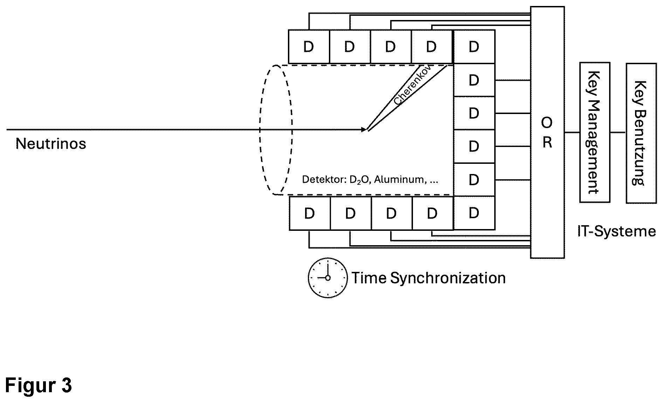

Figur 3 zeigt den empfängerseitigen Aufbau: Die vom Sender ausgehenden gerichteten Neutrino-Pulse treffen auf der anderen Seite der Erde auf eine Detektoreinheit, wobei wenige der Neutrinos mit der Materie im Detektor wechselwirken. Die Detektoreinheit weist eine Vielzahl von Detektormodulen (D) auf, die je nach Design aus Materialien wie Schwerwasser (D₂O), Aluminium oder anderen dichten Stoffen bestehen können. Bei einer Wechselwirkung der Neutrinos mit Deuterium entstehen geladene Teilchen, wie Elektronen oder Myonen, die charakteristische Lichtsignale in Form von Cherenkovstrahlung erzeugen. Diese Cherenkovstrahlung wird in den Detektormodulen (D) registriert und in elektrische Signale umgewandelt. Die Signale der einzelnen Detektormodule werden über ein logisches OR-System ("OR") zusammengeführt. Das bedeutet, dass ein Neutrino-Treffer in einem beliebigen Modul (D) innerhalb eines Zeitschlitzes eine logische "1" kodiert, während das Fehlen eines Signals innerhalb eines Zeitschlitzes einer logischen "0" entspricht. Diese Methode stellt sicher, dass ein einzelnes Detektionsereignis ausreicht, um eine erfolgreiche Bitzuordnung vorzunehmen.

Die Detektoreinheit ist auch mit einer Zeitsynchronisationseinheit ("Time Synchronisation") verbunden, die sicherstellt, dass nur Ereignisse innerhalb des erwarteten Zeitfensters der eintreffenden Neutrino-Pulse berücksichtigt werden. Dies minimiert das Risiko von Fehlmessungen durch Hintergrundsignale.

Die detektierten Schlüsselbits (0 oder 1) werden im Rahmen des Schlüsselmanagements ("Key Management") in einem Hardware Security Modul (HSM) gespeichert, das für die sichere Verwaltung der Schlüssel verantwortlich ist. Diese Schlüsselbits können später entweder direkt verwendet oder zur Ableitung weiterer Schlüssel genutzt werden ("Key Benutzung"). Die Verwendung von Hardware Security Modulen schützt die Schlüssel vor Manipulationen und sorgt für eine sichere Übergabe an die IT-Infrastruktur.

Die gespeicherten Schlüssel werden über das Key-Management-System an die IT-Infrastruktur übergeben, wo sie für Anwendungen wie die symmetrische Datenverschlüsselung zur Verfügung stehen.

Das beschriebene System ist flexibel und kann mit etablierten Detektoren wie denjenigen aus dem CERN-Gran-Sasso-, IceCube- oder MINOS-Experiment implementiert werden. Dadurch werden die Kosten reduziert und die Realisierung des Verfahrens beschleunigt.

Der senderseitige Kickermagnet und die zugehörigen IT-Systeme müssen der höchsten Geheimhaltungsstufe genügen. Daher werden sie zugangsbeschränkt, emmissionsgeschützt verbaut. Analoge Anforderungen existieren für die Verbindung der Photodetektoren und IT-Systemen der Empfängerseite. Aufgrund der baulichen Abgeschiedenheit der großen Beschleunigerzentren zum Teil in unterirdischen Kavernen werden diese Bedingungen schon wegen des "Schutzes von Leib und Leben" bereits umgesetzt.

## Patentansprüche

1. Verfahren zum Austausch eines kryptografischen Schlüssels zwischen einem Sender und einem Empfänger unter Verwendung eines Neutrino-basierten Kommunikationskanals, umfassend die Schritte:
Senderseitige Erzeugung eines Neutrino-Strahls durch:
- Beschleunigen von Protonen in einem Protonenstrahl,
- Auslenkung des Protonenstrahls auf ein Target zur Erzeugung von Neutrinos durch den Zerfall kurzlebiger Teilchen;
Senderseitige Generierung einer Folge von Zufallsbits, die den kryptografischen Schlüssel repräsentiert, und Kodierung der Zufallsbits durch:
- Steuerung der Auslenkung des Protonenstrahls mittels eines steuerbaren Ablenksystems, um entsprechend der Zufallsbits den Protonenstrahl entweder auf das Target oder auf einen Absorber zu lenken, wodurch die Zufallsbits als Neutrino-Pulse in Zeitschlitze kodiert werden;
Übertragung der Neutrino-Pulse vom Sender zum Empfänger;
Synchronisierung von Sender und Empfänger mittels einer Zeitsynchronisationseinheit, die die Taktung der erzeugten Neutrino-Pulse mit Zeitschlitze des Empfängersystems synchronisiert;
Empfang der Neutrino-Pulse durch einen Neutrino-Detektor des Empfängers, wobei:
- Zerfallsprodukte, insbesondere Lichtsignale, die bei der Wechselwirkung der Neutrinos mit einem Detektormedium erzeugt werden, detektiert werden und
- die innerhalb eines Zeitschlitzes detektierten Signale jeweils einem Schlüsselbit zugeordnet werden;
Speicherung und Aneinanderreihung der empfangenen Schlüsselbits zur Erzeugung des kryptografischen Schlüssels, der in einem Schlüsselspeichermodul des Empfängers gespeichert wird.

2. Verfahren nach Anspruch 1,
**dadurch gekennzeichnet,**
**dass** der Sender einen Kickermagneten umfasst, der mittels magnetischer Pulse den hochenergetischen Protonenstrahl entsprechend der Zufallsbits auf das Target oder den Absorber lenkt.

3. Verfahren nach Anspruch 1,
**dadurch gekennzeichnet,**
**dass** die Zeitsynchronisationseinheit GPS-Signale nutzt, um die Synchronisation der Zeitschlitze zwischen Sender und Empfänger sicherzustellen.

4. Verfahren nach Anspruch 1,
**dadurch gekennzeichnet,**
**dass** der Zufallszahlengenerator ein physikalischer Zufallszahlengenerator ist, der auf quantentechnologischen Prinzipien basiert.

5. Verfahren nach einem der vorherigen Ansprüche,
**dadurch gekennzeichnet,**
**dass** der Neutrino-Detektor mittels Szintillations-Detektoren Cherenkovstrahlung detektiert, die durch die Wechselwirkung von Neutrinos mit einem Detektormedium erzeugt wird.

6. Verfahren nach Anspruch 5,
**dadurch gekennzeichnet,**
**dass** die Detektionssignale auf spezifische Eigenschaften der Cherenkovstrahlung, einschließlich ihrer Richtungsabhängigkeit, analysiert werden, um die Richtung der Neutrino-Pulse zu bestätigen.

7. Verfahren nach einem der vorherigen Ansprüche,
**dadurch gekennzeichnet,**
**dass** die kryptographischen Schlüssel auf der Senderseite und auf der Empfängerseite in einem Hardware-Security-Modul gespeichert werden.

8. Verfahren nach einem der vorherigen Ansprüche,
**dadurch gekennzeichnet,**
**dass** die Zufallsbits zusätzlich mittels Forward Error Correction (FEC)-Codes kodiert werden, um Übertragungsfehler zu erkennen und zu korrigieren.

9. Verfahren nach einem der vorherigen Ansprüche,
**dadurch gekennzeichnet,**
**dass** die Neutrino-Pulse auf ihrem Weg zwischen Sender und Empfänger die Erde durchdringen.

10. Verfahren nach einem der vorherigen Ansprüche,
**dadurch gekennzeichnet,**
**dass** die erzeugten Pionen vor ihrem Zerfall in Neutrinos durch magnetische Fokussierelemente kanalisiert und ausgerichtet werden.

11. Verfahren nach einem der vorherigen Ansprüche,
**dadurch gekennzeichnet,**
**dass** die Synchronisationseinheit auf der Empfängerseite für die Kalibrierung der Detektionszeitfenster eingesetzt wird, um präzise Zuordnungen der Neutrino-Pulse zu kryptographischen Schlüsselbits zu bewerkstelligen.

12. Verfahren nach einem der vorherigen Ansprüche,
**dadurch gekennzeichnet,**
**dass** der Schlüssel an einen Encryptor weitergegeben wird, der Datenpakete oder Lichtsignale mit dem Schlüssel symmetrisch verschlüsselt.

13. System zum Austausch eines kryptografischen Schlüssels zwischen einem Sender und einem Empfänger unter Verwendung eines Neutrino-basierten Kommunikationskanals, umfassend:
Senderseitige Vorrichtungen umfassend:
- einen Protonenbeschleuniger zur Erzeugung eines hochenergetischen Protonenstrahls,
- ein steuerbares Ablenksystem, das den Protonenstrahl entsprechend einer Folge von Zufallsbits entweder auf ein Target zur Erzeugung von Neutrinos durch den Zerfall kurzlebiger Teilchen oder auf einen Absorber lenkt,
- einen Zufallszahlengenerator, der die Folge von Zufallsbits generiert und Steuerbefehle an das Ablenksystem ausgibt, wodurch die Zufallsbits als Neutrino-Pulse in Zeitschlitze kodiert werden und
- eine Zeitsynchronisationseinheit zur Synchronisierung der erzeugten Neutrino-Pulse mit einem Empfängersystem,
Empfangsseitige Vorrichtungen umfassend:
- einen Neutrino-Detektor, der Lichtsignale detektiert, die durch Wechselwirkungen von Neutrinos mit einem Detektormedium erzeugt werden
- eine Signalanalyseeinheit, die die detektierten Lichtsignale verarbeitet und die Signale jeweils einem Schlüsselbit zuordnet und
- eine Zeitsynchronisationseinheit, die mit der senderseitigen Zeitsynchronisationseinheit kommuniziert, um die zeitliche Zuordnung der Neutrino-Pulse in den Zeitschlitzen sicherzustellen,
Speichereinheiten umfassend:
- ein senderseitiges Schlüsselspeichermodul zur Speicherung der Zufallsbits, die den kryptografischen Schlüssel repräsentieren und
- ein empfangsseitiges Schlüsselspeichermodul zur Speicherung der aus den empfangenen Neutrino-Pulsen gewonnenen Schlüsselbits, wobei die empfangenen Schlüsselbits aneinandergereiht werden, um den kryptografischen Schlüssel zu erzeugen.

14. Vorrichtung zum Erzeugen und Versenden eines kryptografischen Schlüssels unter Verwendung eines Neutrino-basierten Kommunikationskanals umfassend:
- einen Protonenbeschleuniger zur Erzeugung eines hochenergetischen Protonenstrahls,
- ein steuerbares Ablenksystem, das den Protonenstrahl entsprechend einer Folge von Zufallsbits entweder auf ein Target zur Erzeugung von Neutrinos durch den Zerfall kurzlebiger Teilchen oder auf einen Absorber lenkt,
- einen Zufallszahlengenerator, der die Folge von Zufallsbits generiert und Steuerbefehle an das Ablenksystem ausgibt, wodurch die Zufallsbits als Neutrino-Pulse in Zeitschlitze kodiert werden,
- eine Zeitsynchronisationseinheit zur Synchronisierung der erzeugten Neutrino-Pulse mit einem Empfängersystem und
- ein Schlüsselspeichermodul zur Speicherung der Zufallsbits, die den kryptografischen Schlüssel repräsentieren.

15. Vorrichtung zum Empfangen eines kryptografischen Schlüssels über einen Neutrino-basierten Kommunikationskanal umfassend:
- einen Neutrino-Detektor, der Zerfallsprodukte, insbesondere Lichtsignale, detektiert, die bei Wechselwirkungen von Neutrinos mit einem Detektormedium erzeugt werden,
- eine Signalanalyseeinheit, die die detektierten Lichtsignale verarbeitet und die Signale jeweils einem Schlüsselbit zuordnet,
- eine Zeitsynchronisationseinheit, die mit der senderseitigen Zeitsynchronisationseinheit kommuniziert, um die zeitliche Zuordnung der Neutrino-Pulse in den Zeitschlitzen sicherzustellen und
- ein Schlüsselspeichermodul zur Speicherung der aus den empfangenen Neutrino-Pulsen gewonnenen Schlüsselbits, wobei die empfangenen Schlüsselbits aneinandergereiht werden, um den kryptografischen Schlüssel zu erzeugen.

16. Vorrichtung nach Anspruch 15,
**gekennzeichnet durch**
einen Encryptor der den Schlüssel erhält und Datenpakete oder Lichtsignale mit dem Schlüssel symmetrisch verschlüsselt.

## Claims

1. Method for exchanging a cryptographic key between a transmitter and a receiver using a neutrino-based communication channel, comprising the steps of:
Transmitter-side generation of a neutrino beam by:
- accelerating protons in a proton beam,
- deflecting the proton beam onto a target for generating neutrinos by the decay of short-lived particles;
Transmitter-side generation of a sequence of random bits representing the cryptographic key, and encoding of the random bits by:
- controlling the deflection of the proton beam by means of a controllable deflection system in order to deflect the proton beam, in accordance with the random bits, either onto the target or onto an absorber, whereby the random bits are encoded as neutrino pulses in time slots;
transmitting the neutrino pulses from the transmitter to the receiver;
synchronizing the transmitter and the receiver by means of a time synchronization unit which synchronizes the timing of the generated neutrino pulses with time slots of the receiver system;
receiving the neutrino pulses by a neutrino detector of the receiver, wherein:
- decay products, in particular light signals, which are generated upon interaction of the neutrinos with a detector medium are detected, and
- the signals detected within a time slot are respectively assigned to a key bit;
storing and concatenating the received key bits to generate the cryptographic key, which is stored in a key storage module of the receiver.

2. Method according to claim 1, **characterized in that** the transmitter comprises a kicker magnet which, by means of magnetic pulses, deflects the high-energy proton beam onto the target or the absorber in accordance with the random bits.

3. Method according to claim 1, **characterized in that** the time synchronization unit uses GPS signals in order to ensure synchronization of the time slots between the transmitter and the receiver.

4. Method according to claim 1, **characterized in that** the random number generator is a physical random number generator based on quantum technology principles.

5. Method according to one of the preceding claims, **characterized in that** the neutrino detector detects, by means of scintillation detectors, Cherenkov radiation which is generated by the interaction of neutrinos with a detector medium.

6. Method according to claim 5, **characterized in that** the detection signals are analyzed for specific properties of the Cherenkov radiation, including its directional dependence, in order to confirm the direction of the neutrino pulses.

7. Method according to one of the preceding claims, **characterized in that** the cryptographic keys are stored on the transmitter side and on the receiver side in a hardware security module.

8. Method according to one of the preceding claims, **characterized in that** the random bits are additionally encoded by means of Forward Error Correction (FEC) codes in order to detect and correct transmission errors.

9. Method according to one of the preceding claims, **characterized in that** the neutrino pulses pass through the Earth on their path between the transmitter and the receiver.

10. Method according to one of the preceding claims, **characterized in that** the generated pions are channeled and aligned by magnetic focusing elements before their decay into neutrinos.

11. Method according to one of the preceding claims, **characterized in that** the synchronization unit on the receiver side is used for calibrating the detection time windows in order to effect precise assignments of the neutrino pulses to cryptographic key bits.

12. Method according to one of the preceding claims, **characterized in that** the key is passed on to an encryptor which symmetrically encrypts data packets or light signals with the key.

13. System for exchanging a cryptographic key between a transmitter and a receiver using a neutrino-based communication channel, comprising:
Transmitter-side devices comprising:
- a proton accelerator for generating a high-energy proton beam,
- a controllable deflection system which, in accordance with a sequence of random bits, deflects the proton beam either onto a target for generating neutrinos by the decay of short-lived particles or onto an absorber,
- a random number generator which generates the sequence of random bits and outputs control commands to the deflection system, whereby the random bits are encoded as neutrino pulses in time slots, and
- a time synchronization unit for synchronizing the generated neutrino pulses with a receiver system,
Receiver-side devices comprising:
- a neutrino detector which detects light signals that are generated by interactions of neutrinos with a detector medium
- a signal analysis unit which processes the detected light signals and respectively assigns the signals to a key bit, and
- a time synchronization unit which communicates with the transmitter-side time synchronization unit in order to ensure the temporal assignment of the neutrino pulses in the time slots,
Storage units comprising:
- a transmitter-side key storage module for storing the random bits representing the cryptographic key, and
- a receiver-side key storage module for storing the key bits obtained from the received neutrino pulses, wherein the received key bits are concatenated in order to generate the cryptographic key.

14. Device for generating and sending a cryptographic key using a neutrino-based communication channel, comprising:
- a proton accelerator for generating a high-energy proton beam,
- a controllable deflection system which, in accordance with a sequence of random bits, deflects the proton beam either onto a target for generating neutrinos by the decay of short-lived particles or onto an absorber,
- a random number generator which generates the sequence of random bits and outputs control commands to the deflection system, whereby the random bits are encoded as neutrino pulses in time slots,
- a time synchronization unit for synchronizing the generated neutrino pulses with a receiver system, and
- a key storage module for storing the random bits representing the cryptographic key.

15. Device for receiving a cryptographic key via a neutrino-based communication channel, comprising:
- a neutrino detector which detects decay products, in particular light signals, which are generated upon interactions of neutrinos with a detector medium,
- a signal analysis unit which processes the detected light signals and respectively assigns the signals to a key bit,
- a time synchronization unit which communicates with the transmitter-side time synchronization unit in order to ensure the temporal assignment of the neutrino pulses in the time slots, and
- a key storage module for storing the key bits obtained from the received neutrino pulses, wherein the received key bits are concatenated in order to generate the cryptographic key.

16. Device according to claim 15, **characterized by** an encryptor which receives the key and symmetrically encrypts data packets or light signals with the key.

## Revendications

1. Procédé pour échanger une clé cryptographique entre un émetteur et un récepteur au moyen d'un canal de communication à base de neutrinos, comprenant les étapes suivantes :
la génération, côté émetteur, d'un faisceau de neutrinos par :
- l'accélération de protons dans un faisceau de protons,
- la déviation du faisceau de protons vers une cible pour générer des neutrinos par désintégration de particules à courte durée de vie ;
la génération, côté émetteur, d'une séquence de bits aléatoires représentant la clé cryptographique et le codage des bits aléatoires par :
- la commande de la déviation du faisceau de protons au moyen d'un système de déviation pouvant être commandé afin de diriger le faisceau de protons soit vers la cible, soit vers un absorbeur conformément aux bits aléatoires, codant ainsi les bits aléatoires sous forme d'impulsions de neutrinos dans des créneaux temporels ;
la transmission des impulsions de neutrinos de l'émetteur au récepteur ;
la synchronisation de l'émetteur et du récepteur au moyen d'une unité de synchronisation temporelle qui synchronise le cadencement des impulsions de neutrinos générées avec les créneaux temporels du système récepteur ;
la réception des impulsions de neutrinos au moyen d'un détecteur de neutrinos du récepteur, dans lequel :
- des produits de désintégration, en particulier les signaux lumineux générés lors de l'interaction des neutrinos avec un milieu détecteur, sont détectés, et
- les signaux détectés à l'intérieur d'un créneau temporel sont respectivement associés à un bit de clé ;
le stockage et l'enchaînement les uns à la suite des autres des bits de clé reçus pour générer la clé cryptographique, qui est stockée dans un module de mémoire de clé du récepteur.

2. Procédé selon la revendication 1,
**caractérisé**
**en ce que** l'émetteur comprend un aimant de déflexion rapide qui, au moyen d'impulsions magnétiques, dirige le faisceau de protons de haute énergie vers la cible ou l'absorbeur conformément aux bits aléatoires.

3. Procédé selon la revendication 1,
**caractérisé**
**en ce que** l'unité de synchronisation temporelle utilise des signaux GPS pour assurer la synchronisation des créneaux temporels entre l'émetteur et le récepteur.

4. Procédé selon la revendication 1,
**caractérisé**
**en ce que** le générateur de nombres aléatoires est un générateur de nombres aléatoires physique basé sur des principes de technologie quantique.

5. Procédé selon l'une des revendications précédentes,
**caractérisé**
**en ce que** le détecteur de neutrinos détecte, au moyen de détecteurs à scintillation, le rayonnement de Cherenkov généré par l'interaction des neutrinos avec un milieu détecteur.

6. Procédé selon la revendication 5,
**caractérisé**
**en ce que** les signaux de détection sont analysés quant à des propriétés spécifiques du rayonnement de Cherenkov, y compris sa dépendance à la direction, afin de confirmer la direction des impulsions de neutrinos.

7. Procédé selon l'une des revendications précédentes,
**caractérisé**
**en ce que** les clés cryptographiques sont stockées côté émetteur et côté récepteur, dans un module de sécurité matériel.

8. Procédé selon l'une des revendications précédentes,
**caractérisé**
**en ce que** les bits aléatoires sont en outre codés au moyen de codes de correction d'erreurs sans voie de retour (FEC) afin de détecter et de corriger les erreurs de transmission.

9. Procédé selon l'une des revendications précédentes,
**caractérisé**
**en ce que** les impulsions de neutrinos traversent la Terre sur leur trajet entre l'émetteur et le récepteur.

10. Procédé selon l'une des revendications précédentes,
**caractérisé**
**en ce que** les pions générés sont canalisés et orientés par des éléments de focalisation magnétiques avant leur désintégration en neutrinos.

11. Procédé selon l'une des revendications précédentes,
**caractérisé**
**en ce que** l'unité de synchronisation est utilisée côté récepteur pour l'étalonnage des fenêtres temporelles de détection afin d'effectuer des associations précises entre les impulsions de neutrinos et les bits de clé cryptographique.

12. Procédé selon l'une des revendications précédentes,
**caractérisé**
**en ce que** la clé est transmise à un dispositif de chiffrement qui chiffre de manière symétrique des paquets de données ou des signaux lumineux au moyen de la clé.

13. Système pour échanger une clé cryptographique entre un émetteur et un récepteur au moyen d'un canal de communication à base de neutrinos, comprenant :
des dispositifs côté émetteur comprenant :
- un accélérateur de protons pour générer un faisceau de protons de haute énergie,
- un système de déviation pouvant être commandé qui dirige le faisceau de protons conformément à une séquence de bits aléatoires soit vers une cible pour générer des neutrinos par désintégration de particules à courte durée de vie, soit vers un absorbeur,
- un générateur de nombres aléatoires qui génère la séquence de bits aléatoires et délivre des instructions de commande au système de déviation, codant ainsi les bits aléatoires sous forme d'impulsions de neutrinos dans des créneaux temporels, et
- une unité de synchronisation temporelle pour synchroniser les impulsions de neutrinos générées avec un système récepteur,
des dispositifs côté réception comprenant :
- un détecteur de neutrinos qui détecte les signaux lumineux générés par les interactions des neutrinos avec un milieu détecteur,
- une unité d'analyse de signal qui traite les signaux lumineux détectés et associe respectivement les signaux à un bit de clé, et
- une unité de synchronisation temporelle qui communique avec l'unité de synchronisation temporelle côté émetteur afin d'assurer l'association temporelle des impulsions de neutrinos dans les créneaux temporels,
des unités de stockage comprenant :
- un module de mémoire de clé côté émetteur pour stocker les bits aléatoires représentant la clé cryptographique, et
- un module de mémoire de clé côté réception pour stocker les bits de clé obtenus à partir des impulsions de neutrinos reçues, les bits de clé reçus étant enchaînés les uns à la suite des autres afin de générer la clé cryptographique.

14. Dispositif pour générer et émettre une clé cryptographique au moyen d'un canal de communication à base de neutrinos, comprenant :
- un accélérateur de protons pour générer un faisceau de protons de haute énergie,
- un système de déviation pouvant être commandé qui dirige le faisceau de protons conformément à une séquence de bits aléatoires soit vers une cible pour générer des neutrinos par désintégration de particules à courte durée de vie, soit vers un absorbeur,
- un générateur de nombres aléatoires qui génère la séquence de bits aléatoires et délivre des instructions de commande au système de déviation, codant ainsi les bits aléatoires sous forme d'impulsions de neutrinos dans des créneaux temporels,
- une unité de synchronisation temporelle pour synchroniser les impulsions de neutrinos générées avec un système récepteur, et
- un module de mémoire de clé pour stocker les bits aléatoires représentant la clé cryptographique.

15. Dispositif pour recevoir une clé cryptographique par l'intermédiaire d'un canal de communication à base de neutrinos, comprenant :
- un détecteur de neutrinos qui détecte des produits de désintégration, en particulier des signaux lumineux, générés lors d'interactions des neutrinos avec un milieu détecteur,
- une unité d'analyse de signal qui traite les signaux lumineux détectés et associe respectivement les signaux à un bit de clé,
- une unité de synchronisation temporelle qui communique avec l'unité de synchronisation temporelle côté émetteur afin d'assurer l'association temporelle des impulsions de neutrinos dans les créneaux temporels, et
- un module de mémoire de clé pour stocker les bits de clé obtenus à partir des impulsions de neutrinos reçues, les bits de clé reçus étant enchaînés les uns à la suite des autres afin de générer la clé cryptographique.

16. Dispositif selon la revendication 15,
**caractérisé par**
un dispositif de chiffrement qui reçoit la clé et chiffre de manière symétrique des paquets de données ou des signaux lumineux au moyen de la clé.
